# FASCICULE DE BREVET EUROPEEN

(11) **EP 2 277 080 B1**
(45) Date de publication et mention de la délivrance du brevet: **31.07.2013**
(21) Numéro de dépôt: 09750010.2
(22) Date de dépôt: 05.05.2009
(51) Int. Cl.: G02C 13/00

(54) **INSTALLATION DE DÉTERMINATION DE L'ORIENTATION DE VERRES OPHTALMIQUES D'UNE MONTURE**
VORRICHTUNG ZUR BESTIMMUNG DER AUSRICHTUNG VON ZU EINEM RAHMEN GEHÖRENDEN KONTAKTLINSEN
APPARATUS FOR DETERMINING THE ORIENTATION OF OPHTHALMIC LENSES BELONGING TO A FRAME

(30) Priorité: 15.05.2008 FR 0802624
(43) Date de publication de la demande: 26.01.2011
(73) Titulaire: ACEP France, 75008 Paris (FR)
(72) Inventeur: SAYAG, Jean-Philippe, F-75008 Paris (FR)
(74) Mandataire: Bertrand, Didier
(86) Numéro de dépôt international: PCT/FR2009/000532
(87) Numéro de publication internationale: WO 2009/141529

(56) Documents cités:
- WO-A-2007/128925
- WO-A-2008/003897
- FR-A- 2 896 682
- FR-A- 2 906 047
- US-A1- 2007 195 266

## Description

La présente invention se rapporte à une installation de détermination de l'orientation des verres ophtalmiques d'une monture et à une méthode de détermination de l'orientation des verres ophtalmiques d'une monture susceptible d'être mise en oeuvre grâce à ladite installation.

Des installations connues permettent déjà de mesurer cette orientation et plus précisément de mesurer le galbe de la monture.

Les montures, communément appelées montures de lunettes, comportent deux demi-parties de réception formant deux logements et à l'intérieur desquels sont respectivement enchâssés les verres ophtalmiques. Les deux demi-parties sont reliées ensemble par un pont central et elles sont équipées respectivement de deux branches à l'opposé du pont central. De la sorte, lesdites deux demi-parties de réception s'étendent symétriquement l'une de l'autre par rapport à un plan de symétrie principal coupant ledit pont central. Ainsi, les montures sont destinées à être ajustées sur le visage d'un patient, le pont central en appui sur son nez, les deux demi-parties respectivement devant ses yeux et les deux branches respectivement sur ses oreilles. Le galbe représente alors l'inclinaison des deux demi-parties de réception et partant, des verres ophtalmiques, par rapport à un plan perpendiculaire au plan de symétrie principal précité, ou tout simplement à l'inclinaison des deux demi-parties de réception, l'une par rapport. à l'autre ; une inclinaison de 180° correspondrait alors à un galbe nul.

Les installations connues comprennent un dispositif d'enregistrement, lequel inclut une caméra numérique et des moyens de traitement de l'image fournie par la caméra. Elles comprennent également un premier élément positionneur muni d'un premier repère et un second élément positionneur muni d'un second repère. Le premier élément positionneur est ajustable sur la monture de lunettes en définissant un plan moyen de la monture, tandis que le second élément positionneur est ajusté sur la monture de manière à définir une orientation des demi-parties de réception.

On se reportera au document FR 2 903 504, lequel décrit une telle installation.

Ainsi, grâce à la caméra avec laquelle on enregistre une image des éléments positionneurs en appui sur la monture qui est elle-même sur le visage du patient, on détermine ensuite la position du premier repère vis-à-vis du second repère pour en déduire le galbe de la monture.

Bien que ce type d'installation soit efficient, et permette déjà de fournir une bonne évaluation du galbe, il est nécessaire de fournir des valeurs encore plus précises de l'inclinaison des demi-parties de réception. Surtout, il est désormais nécessaire de proposer des équipements simples ne nécessitant pas de compétences particulières des personnels destinés à les mettre en oeuvre.

Ainsi, un problème qui se pose alors et que vise à résoudre la présente invention, est de fournir une installation qui permette précisément d'obtenir des valeurs du galbe plus précises et aussi qui soit simple à mettre en oeuvre.

Dans le but de résoudre ce problème, la présente invention propose une installation de détermination de l'orientation des verres ophtalmiques d'une monture. Cette installation comprend d'une part un dispositif d'enregistrement et d'autre part un équipement de repérage apte à être installé sur une monture chaussée par un patient. Ladite monture présente deux demi-parties de réception aptes à recevoir des verres ophtalmiques et un pont central qui relie lesdites deux demi-parties ; lesdites deux demi-parties s'étendant symétriquement l'une de l'autre par rapport audit pont central. Ledit équipement de repérage comporte deux éléments indépendants, un premier élément formant arceau présentant une portion centrale marquée d'un premier repère et deux extrémités de fixation adaptées à venir respectivement en prise dans les bords latéraux desdites demi-parties pour maintenir ladite portion centrale à distance de ladite monture, et un second élément marqué d'un second repère, monté sur ladite monture entre les deux bords latéraux, ledit dispositif d'enregistrement comprenant une caméra orientée en direction des yeux dudit patient selon un angle de vue déterminé pour enregistrer une image dudit équipement de repérage installé sur ladite monture. Ladite installation comporte des moyens de traitement pour évaluer, à partir de ladite image, la position relative des deux repères et pour fournir une valeur représentative de l'inclinaison desdits demi-parties l'une par rapport à l'autre. Selon l'invention, l'installation comprend en outre une autre caméra écartée verticalement de ladite une caméra et orientée en direction des yeux dudit patient suivant un autre angle de vue ; et les deux caméras permettent d'enregistrer simultanément deux images dudit équipement de repérage installé sur ladite monture selon les deux angles de vue pour évaluer précisément la position relative des deux repères et pour fournir une valeur représentative de l'inclinaison desdits demi-parties.

Ainsi, une caractéristique de l'invention réside dans la mise en oeuvre d'une seconde caméra pour enregistrer simultanément les deux images de l'équipement de repérage installé sur ladite monture selon les deux angles de vue distincts. Il est précisé que l'enregistrement simultané des deux images signifie que les deux enregistrements s'opèrent exactement au même instant ou à des instants très proches pourvu que le patient soit resté immobile entre ces deux instants. De la sorte, connaissant la position desdites caméra, les angles de vue et la position du patient par rapport aux caméras, on mesure sur les deux images enregistrées, les deux distances apparentes qui séparent les deux repères et on en déduit la distance réelle et partant, le galbe. On expliquera plus en détail, dans la suite de la description, la manière d'obtenir cette valeur correspondant à l'inclinaison des demi-parties de réception l'une par rapport à l'autre.

Selon un mode de réalisation particulièrement avantageux, ledit second élément dudit équipement de repérage est monté sur ledit pont central. Ainsi, le galbe est-il mesuré avec encore plus de précision. En effet, l'élément formant arceau étant solidaire de la monture par l'intermédiaire de ses extrémités de fixation installées au niveau des bords latéraux des demi-parties, ce qui permet de maintenir ladite portion centrale sensiblement perpendiculaire audit plan de symétrie principal, quel que soit le galbe de la monture, les variations du galbe de la monture induisent de grandes variations d'amplitude de la position du pont central.

En outre, ledit élément formant arceau présente des repères de calibration, c'est-à-dire au moins deux repères de calibration écartées l'un de l'autre d'une distance déterminée connue, par exemple 110 mm, de manière à pouvoir en déduire la distance apparente entre les premier et second repères qui apparaissent sur les images en effectuant une simple règle de trois. On parle ici de distance apparente, car les premier et second repères ne se situent a priori pas dans un même plan. En revanche, d'une part on portera les deux repères de calibration espacés l'un de l'autre à une distance la plus grande possible et sur la portion central et d'autre part, on ajustera la position des caméras et du patient de façon que les repères de calibration se situent dans un même plan sur les images. Une telle caractéristique est obtenue si l'axe optique du système optique des caméras est perpendiculaire au segment définit par les repères de calibration.

Par ailleurs, ledit premier élément définissant un plan moyen de premier élément, ladite portion centrale comprend avantageusement une tige en saillie ou canon qui s'étend sensiblement perpendiculairement audit plan moyen de premier élément, et ledit premier repère est situé sur ladite extrémité libre de ladite tige. De la sorte, non seulement on augmente encore la distance entre les deux repères, car les distances apparentes qui séparent le pont central et le premier repère sur les images fournies par les deux caméras sont encore accrues, ce qui permet d'augmenter la précision de mesure, mais aussi on calcule aisément l'angle de vue des caméras par rapport à la tige.

Pour ce faire, lesdits moyens de traitement comportent un module de calcul d'angle, pour déterminer l'angle de ladite tige en saillie par rapport auxdits angles de vue. Ce calcul est réalisé par l'intermédiaire des repères de calibration, grâce auxquels on réalise sur les images une ligne fictive à partie de laquelle on mesure la distance qui la sépare du premier repère. De plus, ledit module de mesure d'angle est adapté à calculer en outre l'angle pantoscopique de ladite monture, c'est-à-dire l'angle du plan moyen de la monture par rapport à la verticale.

En outre, lesdits moyens de traitement comportent un module de calcul de distance verres/oeil pour déterminer, à partir de la valeur représentative de l'inclinaison desdits demi-parties, la distance qui sépare les yeux du patient des verres ophtalmiques. Pour ce faire, il est nécessaire de connaître aussi la distance qui sépare les yeux du patient du premier repère. Aussi, lesdits moyens de traitement permettent, en outre, d'évaluer à partir desdites images, la position relative dudit premier repère et du reflet de la lumière sur le sommet des cornées, les reflets cornéens, pour que le module de calcul détermine ensuite, la distance qui sépare les yeux du patient des verres ophtalmiques. Ainsi qu'on le précisera dans la description détaillée, les reflets cornéens se traduisent, sur les images, par une tâche blanchâtre de petit diamètre au niveau de la cornée. De la sorte, tous les paramètres nécessaires à l'ajustement des verres ophtalmiques dans une monture sont susceptibles d'être déterminés par l'installation conforme à l'invention.

Avantageusement, lesdites caméras sont installées selon un plan vertical de manière à obtenir deux images sur lesquelles les distances apparentes qui séparent les premier et second repères soient le plus éloignées possible l'une de l'autre. En effet, la tige en saillie formant canon et portant le premier repère ainsi que le second élément portant le second repère et situé sur le pont central sont contenus dans un plan sensiblement vertical. De la sorte, les caméras donnent deux images sur lesquelles l'amplitude de variation de la distance entre les deux repères est maximale et par conséquent, on obtient une plus grande précision dans le calcul du galbe, comme on l'expliquera ci-après.

Selon un second aspect, la présente invention concerne une méthode de détermination de l'orientation des verres ophtalmiques d'une monture, ladite méthode étant du type selon laquelle :
- on fournit un dispositif d'enregistrement et un équipement de repérage apte à être installé sur une monture chaussée par un patient, ladite monture présentant deux demi-parties de réception aptes à recevoir des verres ophtalmiques et un pont central qui relie lesdites deux demi-parties, lesdites deux demi-parties s'étendant symétriquement l'une de l'autre par rapport audit pont central, ledit équipement de repérage comportant deux éléments indépendants, un premier élément formant arceau présentant une portion centrale marquée d'un premier repère et deux extrémités de fixation adaptées à venir respectivement en prise dans les bords latéraux desdites demi-parties pour maintenir ladite portion centrale à distance de ladite monture, et un second élément marqué d'un second repère, monté sur ladite monture entre les deux bords latéraux, ledit dispositif d'enregistrement comprenant une caméra orientée en direction des yeux dudit patient selon un angle de vue déterminé ;
- on enregistre une image dudit équipement de repérage installé sur ladite monture ;
- on évalue à partir de ladite image, la position relative des deux repères;
   et,
- on fournit une valeur représentative de l'inclinaison desdits demi-parties l'une par rapport à l'autre.

Selon l'invention ladite méthode comprend en outre les étapes suivantes :
- on fournit une autre caméra écartée verticalement de ladite une caméra et orientée en direction des yeux dudit patient suivant un autre angle de vue;
- on enregistre simultanément deux images dudit équipement de repérage installé sur ladite monture selon les deux angles de vue ;et,
- on évalue précisément la position relative des deux repères pour fournir une valeur représentative de l'inclinaison desdits demi-parties.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique de face des yeux d'un patient muni d'éléments de l'installation conforme à l'invention ;
- la Figure 2 est une vue schématique de dessus selon la flèche II, des éléments représentés sur la Figure 1;
- la Figure 3 est une vue schématique de côté selon la flèche III, des éléments représentés sur la Figure 2 ;
- la Figure 4 est une représentation schématique de l'installation conforme à l'invention ; et,
- la Figure 5 est un schéma synoptique d'un élément de l'installation conforme à l'invention.

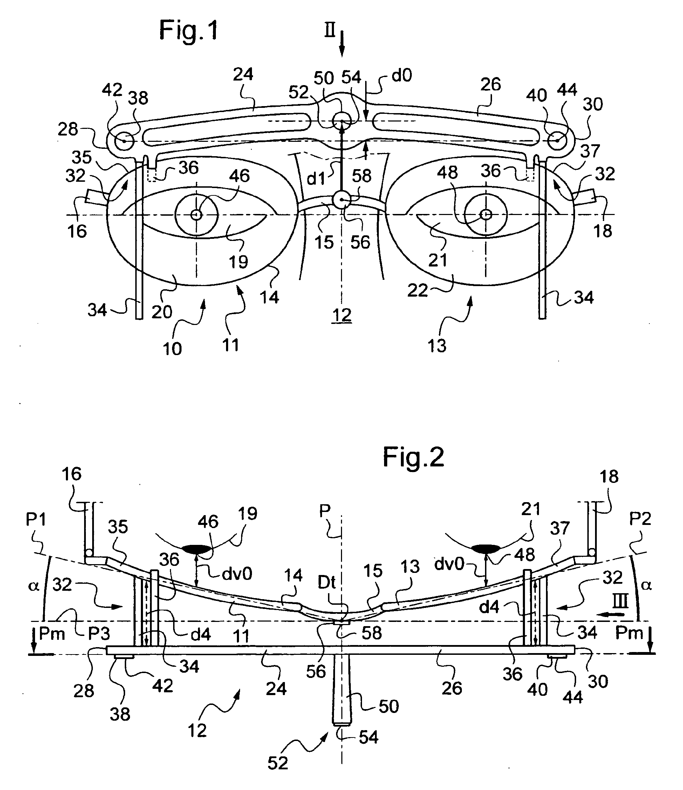

La Figure 1 illustre une paire de lunettes 10 installée sur le visage 12 d'un patient. Cette paire de lunettes 10 présente une monture 14 équipée de deux branches 16, 18 et de deux verres ophtalmiques 20, 22 qui s'étendent respectivement devant les yeux 19, 21 du patient. La monture 14 présente deux demi-parties de réception 11, 13, destinées à recevoir les verres ophtalmiques 20, 22 et un pont central 15 qui relie ensemble les deux demi-parties de réception 11, 13. En outre, la monture 14 est équipée d'un premier élément de repérage 24 formant arceau. Ce premier élément 24 présente une portion centrale 26 qui s'étend longitudinalement entre deux extrémités opposées 28, 30, lesquelles comportent respectivement une extrémité de fixation 32. L'extrémité de fixation 32 présente une branche avant 34 apte à venir en appui en avant des verres ophtalmiques 20, 22, et à l'opposé, une branche arrière 36, plus courte, venant en appui en arrière des verres ophtalmiques 20, 22. Ainsi, les extrémités de fixation 32 chevauchent les verres ophtalmiques 20, 22 et respectivement des bords latéraux 35, 37, des deux demi-parties de réception 11, 13, au voisinage des deux branches respectives 16, 18 de la monture 14, en laissant libre l'espace visuel du patient. Le premier élément 24 qui est ainsi totalement solidaire de la monture 14, présente deux repères de calibration opposés 38, 40 installés respectivement aux deux extrémités opposées 28, 30. Ces deux repères de calibration 38, 40 présentent respectivement une marque de couleur blanche sous la forme d'un disque et au centre duquel est porté un point noir 42, 44. En outre, les deux points noirs 42, 44 sont espacés d'une distance connue, par exemple égale à exactement 110 mm.

Par ailleurs, on observera sur cette Figure 1, la représentation des pupilles 46, 48 des yeux 19, 21, du patient, lesquelles pupilles 46, 48, sont aptes à présenter en leur centre une marque blanchâtre correspondant au reflet de la lumière, naturelle ou artificielle, au sommet de la cornée. Lorsque l'espace dans lequel se situe l'installation est sombre, une lumière artificielle sera avantageusement fournie pour accentuer la marque blanchâtre précitée sur le sommet de la cornée. Cette marque blanchâtre sur fond noir est aisément repérable par des moyens automatiques de traitement d'image et elle correspond sensiblement à un point appartenant à la droite correspondant à l'axe optique de l'oeil.

Le premier élément de repérage 24 formant arceau, définit un plan moyen Pm sensiblement parallèle au plan de la Figure 1, et la portion centrale 26 comporte une tige en saillie formant canon 50 à l'extrémité 52 de laquelle un premier repère de positionnement 54 est marqué. Tout comme les repères de calibration opposés 38, 40, ce premier repère de positionnement 54 présente une marque de couleur blanche sous la forme d'un disque et un point noir porté en son centre.

En outre, le pont central 15 de la monture 14 présente un second élément de repérage 56 constitué d'une pastille collée sur ce pont central 15. Cette pastille 56, présente un second repère de positionnement 58 constitué également d'un disque de couleur blanche portante en son centre un point noir.

Le premier élément de repérage 24 et le second élément de repérage 56 constituent les deux éléments d'un équipement de repérage dont on expliquera ci-après le mode de coopération.

On se reportera à présent sur la Figure 2, illustrant en vue de dessus les éléments représentés sur la Figure 1. On retrouve sur cette Figure 2, les deux demi-parties de réception 11, 13 symétriques l'une de l'autre par rapport à un plan de symétrie vertical P coupant le pont central 15. Ces deux demi-parties de réception 11, 13 définissent respectivement de deux demi-plans P1, P2, coupant le plan de symétrie verticale P au niveau du pont central 15 en définissant une seule et même droite Dt. Un plan P3 perpendiculaire au plan de symétrie vertical P et contenant la droite Dt, est parallèle au plan moyen Pm du premier élément de repérage 24 et il permet de définir le galbe de la monture 14. En effet, le galbe correspond à l'angle formé respectivement par les deux demi-plans P1, P2, et le plan P3 perpendiculaire au plan de symétrie principale P. On observera également, que ce galbe peut aussi être défini comme étant l'inclinaison des deux demi-plans P1, P2, l'un par rapport à l'autre, une inclinaison de 180° correspondant à un galbe nul. En outre, on remarquera que le premier repère de positionnement 54 et le second repère de positionnement 58 sont tous les deux coupés par le plan de symétrie verticale P et que, plus le galbe de la monture 14 est important, plus ces deux repères de positionnement 54, 58 sont rapprochés l'un de l'autre et à l'inverse, que plus le galbe est faible, plus ces deux repères de positionnement 54, 58 sont éloignés l'un de l'autre. Ainsi, le principe de l'installation conforme à l'invention, réside notamment dans la mesure de cette distance entre les deux repères de positionnement 54, 58, pour déterminer le galbe.

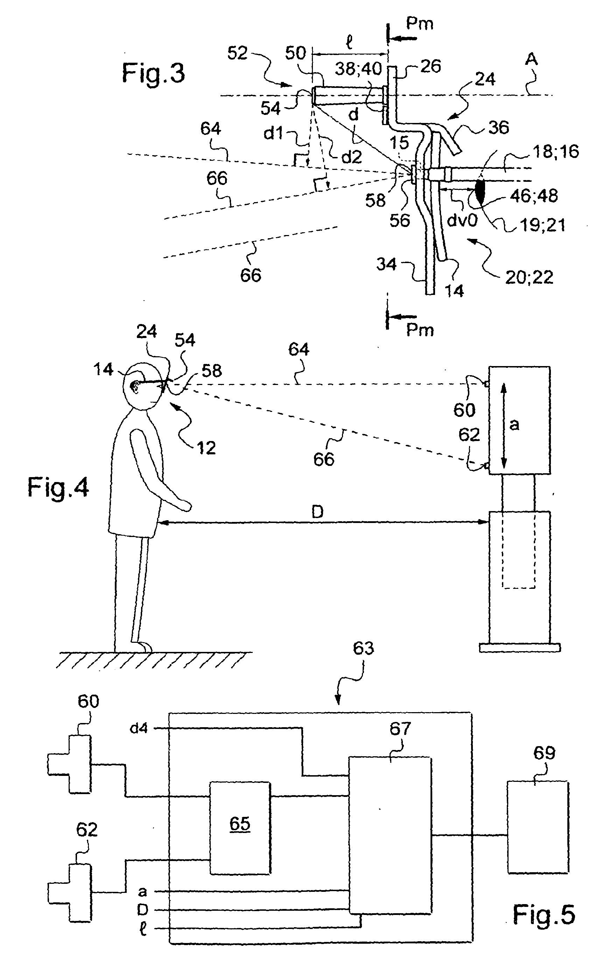

On retrouve sur la Figure 3, illustrant une vue de côté selon la flèche III, des éléments représentés sur la Figure 2, le canon 50 et la pastille 56 collée sur le pont 15, et plus précisément dans le plan de la Figure 3, la distance d qui sépare les deux repères de positionnement l'un 54 à l'extrémité 52 du canon 50, l'autre 58 sur la pastille 56.

L'installation conforme à l'invention comprend également un dispositif d'enregistrement représenté sur la Figure 4 et comportant deux caméras numériques de type CCD, l'une supérieure 60, l'autre inférieure 62, écartées verticalement l'une de l'autre d'une distance déterminée a et orientée en direction du visage 12 du patient à une distance D de celui-ci. L'installation comporte également des moyens de traitement 63 représentés sur la Figure 5. Ces moyens de traitement 63 incluent un module de traitement d'images 65 permettant d'évaluer à partir des images fournies et enregistrées par les caméras 60, 62, notamment la position relative des deux repères de positionnement 54, et 58, ainsi qu'on le précisera ci-après. Ils incluent également un module de calcul 67 permettant d'évaluer l'inclinaison du premier élément de repérage 24 par rapport à la verticale grâce aux repères de calibration 38, 40 et au premier repère de positionnement 54.

Le patient est alors équipé de la monture 14 laquelle est munie de son second élément de repérage 56 constitué d'une pastille collée sur le pont central 15 et incluant le second repère de positionnement 58 ; la monture 14 étant équipée de son premier élément de repérage 24 incluant le premier repère de positionnement 54.

Ainsi, deux images du visage 12 du patient sont enregistrées respectivement et simultanément par l'intermédiaire des deux caméras 60, 62 et sous deux angles de vue différents, l'un 64 sensiblement horizontale, l'autre 66 voisins de 20° par rapport à l'horizontal.

La Figure 1 illustre alors l'image visualisée par la caméra supérieure 60 selon l'angle de vue 64 sensiblement horizontal. Tout d'abord, les moyens de traitement 63, par l'intermédiaire du module de traitement d'images 65 et du module de calcul 67, déterminent l'angle formé par l'axe A du canon 50 par rapport à l'angle de vue 64 de la caméra supérieure 60. Pour ce faire, le module de traitement d'images 65 définit fictivement une ligne coupant les deux repères de calibration 38, 45 et ensuite, mesure dans le plan de l'image, par exemple par comptage de pixels, la distance d0 qui sépare le premier repère de positionnement 54 du canon et cette ligne fictive selon une direction perpendiculaire. La longueur I du canon 50 étant connue, la portion centrale 26 s'étendant dans un même plan Pm, et les deux repères de calibration 38, 45 étant espacés d'une distance connue, et en l'espèce de 110 mm, le module de calcul 67 déduit naturellement de la distance qui sépare le premier repère de positionnement 54 de la ligne fictive, l'angle d'inclinaison de l'axe A du canon 50 par rapport à l'angle de vue 64.

Bien évidemment, cet angle est également mesuré de la même façon sur l'image enregistrée par l'intermédiaire de la caméra inférieure 62, par rapport l'autre angle de vue 66.

En outre, les moyens de traitement permettent de mesurer sur chacune des images les distances apparentes, d1, d2 entre les repères de positionnement 54, 58, et qui apparaissent représentés sur la Figure 3.

De la sorte, connaissant les angles de vue 64, 66 et l'orientation de l'axe A du canon 50 par rapport à ces angles de vue et aussi en déterminant les distances apparentes d1, d2, le module de calcul 67 en déduit la distance réelle d, qui sépare les deux repères de positionnement 54, 58.

On se reportera à nouveau à la Figure 2 pour montrer comment on peut, à partir de cette distance réelle d qui sépare les deux repères de positionnement 54, 58, calculer l'angle α, ou galbe de la monture.

Les dimensions des extrémités de fixation 32 sont également déterminées, et elles permettent de connaître la distance exacte d4, qui sépare la portion centrale 26 des bords latéraux 35, 37 des deux demi-parties de réception 11, 13. On connaît également la distance qui sépare le long de la portion centrale 26 les deux extrémités de fixation 32. En outre, grâce à la distance réelle d, on détermine la position du plan P3 précité qui vient tangenter le pont central 15 au niveau du second repère de positionnement 58. On en déduit alors, par l'intermédiaire du module de calcul 67, l'inclinaison des deux demi-plans P1 et P2 par rapport au plan P3 perpendiculaire au plan de symétrie P, et par conséquent la valeur du galbe. Les moyens de traitement 63 présentent un terminal d'affichage 69 pour afficher les résultats des calculs précités.

Par ailleurs, pour obtenir une connaissance complète des paramètres ophtalmiques, l'installation permet également de déterminer la distance dᵥₒ qui sépare le verre ophtalmologique de l'oeil. Ainsi, selon le même principe de calcul, le module de calcul 67 détermine en premier lieu, grâce aux deux images des deux caméras 60, 62 précitées, et par l'intermédiaire du module de traitement d'image 65, la distance qui sépare les deux reflets de la cornée apparaissant en blanc sur les images, du premier repère de positionnement 54 situé à l'extrémité 52 du canon 50.

On obtient alors les coordonnées en trois dimensions de chacun des sommets des cornées. Puisque le galbe de la monture a déjà été calculé, le module de calcul 67 peut calculer les coordonnées de chacun des points de la monture et plus précisément les coordonnées de l'intersection des points de la monture et de l'axe de la cornée et par conséquent de l'oeil. Il en déduit alors la distance qui sépare le verre ophtalmique de l'oeil.

## Revendications

1. Installation de détermination de l'orientation des verres ophtalmiques (20, 22) d'une monture (14), ladite installation comprenant d'une part un dispositif d'enregistrement et d'autre part un équipement de repérage apte à être installé sur une monture (14) chaussée par un patient, ladite monture présentant deux demi-parties de réception (11, 13) aptes à recevoir des verres ophtalmiques et un pont central (15) qui relie lesdites deux demi-parties, lesdites deux demi-parties (11, 13) s'étendant symétriquement l'une de l'autre par rapport audit pont central, ledit équipement de repérage comportant deux éléments indépendants, un premier élément formant arceau (24) présentant une portion centrale (26) marquée d'un premier repère (54) et deux extrémités de fixation (32) adaptées à venir respectivement en prise dans les bords latéraux (35, 37) desdites demi-parties pour maintenir ladite portion centrale (26) à distance de ladite monture (14), et un second élément (56) marqué d'un second repère (58), monté sur ladite monture entre les deux bords latéraux, ledit dispositif d'enregistrement comprenant une caméra (60) orientée en direction des yeux dudit patient selon un angle de vue (64) déterminé pour enregistrer une image dudit équipement de repérage installé sur ladite monture, ladite installation comportant des moyens de traitement pour évaluer à partir de ladite image, la position relative des deux repères (54, 58) et pour fournir une valeur représentative de l'inclinaison desdits demi-parties (11, 13) l'une par rapport à l'autre ;
**caractérisée en ce qu'**elle comprend en outre une autre caméra (62) écartée verticalement de ladite une caméra (60) et orientée en direction des yeux dudit patient suivant un autre angle de vue (66) ;
et **en ce que** les deux caméras (60, 62) permettent d'enregistrer simultanément deux images dudit équipement de repérage (24, 56) installé sur ladite monture (14) selon les deux angles de vue pour évaluer précisément la position relative des deux repères (54, 58) et pour fournir une valeur représentative de l'inclinaison desdits demi-parties (11, 13).

2. Installation selon la revendication 1, **caractérisée en ce que** ledit second élément (56) dudit équipement de repérage est monté sur ledit pont central (15).

3. Installation selon la revendication 1 ou 2, **caractérisée en ce que** ledit élément formant arceau (24) présente des repères de calibration (38, 40).

4. Installation selon l'une quelconque des revendications 1 à 3, **caractérisée en ce que**, ledit premier élément (24) définissant un plan moyen (Pm) de premier élément, ladite portion centrale comprend une tige en saillie (50) qui s'étend sensiblement perpendiculairement audit plan moyen de premier élément, et **en ce que** ledit premier repère (54) est situé sur ladite extrémité libre (52) de ladite tige (50).

5. Installation selon la revendication 4, **caractérisée en ce que** lesdits moyens de traitement comportent un module de calcul d'angle, pour déterminer l'angle de ladite tige en saillie (50) par rapport auxdits angles de vue (64, 66).

6. Installation selon la revendication 4, **caractérisée en ce que** ledit module de mesure d'angle est adapté à calculer en outre l'angle pantoscopique de ladite monture (14).

7. Installation selon l'une quelconque des revendications 1 à 6, **caractérisée en ce que** lesdits moyens de traitement comportent un module de calcul de distance verre/oeil pour déterminer, à partir de la valeur représentative de l'inclinaison desdits demi-parties (11, 13), la distance qui sépare les yeux (19, 21) du patient des verres ophtalmiques (20, 22).

8. Installation selon la revendication 7, **caractérisée en ce que** lesdits moyens de traitement permettent d'évaluer à partir desdites images, la position relative dudit premier repère (54) et des reflets cornéens pour déterminer la distance qui sépare les yeux (19, 21) du patient des verres ophtalmiques (20, 22).

9. Installation selon l'une quelconque des revendications 1 à 8, **caractérisée en ce que** lesdites caméras (60, 62) sont installées selon un plan vertical.

10. Méthode de détermination de l'orientation des verres ophtalmiques (20, 22) d'une monture (14), ladite méthode étant du type selon laquelle :
- on fournit un dispositif d'enregistrement et un équipement de repérage apte à être installé sur une monture (14) chaussée par un patient, ladite monture présentant deux demi-parties de réception (11, 13) aptes à recevoir des verres ophtalmiques et un pont central (15) qui relie lesdites deux demi-parties, lesdites deux demi-parties (11, 13) s'étendant symétriquement l'une de l'autre par rapport audit pont central (14), ledit équipement de repérage comportant deux éléments indépendants, un premier élément formant arceau (24) présentant une portion centrale (26) marquée d'un premier repère (54) et deux extrémités de fixation (32) adaptées à venir respectivement en prise dans les bords latéraux (35, 37) desdites demi-parties pour maintenir ladite portion centrale (26) à distance de ladite monture (14), et un second élément (56) marqué d'un second repère (58), monté sur ladite monture entre les deux bords latéraux, ledit dispositif d'enregistrement comprenant une caméra (60) orientée en direction des yeux dudit patient selon un angle de vue (64) déterminé ;
- on enregistre une image dudit équipement de repérage installé sur ladite monture ;
- on évalue à partir de ladite image, la position relative des deux repères (54, 58) ; et,
- on fournit une valeur représentative de l'inclinaison desdits demi-parties (11, 13) l'une par rapport à l'autre ;
**caractérisée en ce qu'**elle comprend en outre les étapes suivantes :
- on fournit une autre caméra (62) écartée verticalement de ladite une caméra (60) et orientée en direction des yeux dudit patient suivant un autre angle de vue (66) ;
- on enregistre simultanément deux images dudit équipement de repérage (24, 56) installé sur ladite monture (14) selon les deux angles de vue ;et,
- on évalue précisément la position relative des deux repères (54, 58) pour fournir une valeur représentative de l'inclinaison desdits demi-parties (11, 13).

11. Méthode selon la revendication 10, **caractérisée en ce qu'**on monte ledit second élément (56) dudit équipement de repérage sur ledit pont central (15).

## Patentansprüche

1. Vorrichtung zur Bestimmung der Ausrichtung von zu einem Rahmen (14) gehörenden augenheilkundlichen Linsen (20, 22), wobei die Vorrichtung einerseits eine Aufzeichnungseinheit und andererseits eine Ortungseinheit umfasst, welche auf einen Rahmen (14) montierbar ist, der von einem Patienten aufgesetzt wird, wobei der Rahmen über zwei Aufnahme-Teilhälften (11, 13), die dafür ausgelegt sind, die augenheilkundlichen Linsen aufzunehmen, sowie eine mittige Brücke (15) verfügt, welche die beiden Teilhälften mit einander verbindet, wobei sich die beiden Teilhälften (11, 13) symmetrisch zu einander, in Bezug auf die mittige Brücke, erstrecken, wobei die Ortungseinheit zwei von einander unabhängige Elemente umfasst, nämlich ein erstes Element, das einen Bügel (24) bildet, der einen zentralen Bereich (26) aufweist, welcher mit einer ersten Markierung (54) versehen ist, und der über zwei Halterungsenden (32) verfügt, die dafür ausgelegt sind, mit jeweils einem der seitlichen Ränder (35, 37) der genannten Teilhälften in Kontakt zu kommen, um den zentralen Bereich (26) auf Distanz von dem Rahmen (14) zu halten, und ein zweites Element (56), das mit einer zweiten Markierung (58) versehen und auf den genannten Rahmen zwischen den beiden seitlichen Rändern montiert ist, wobei die Aufzeichnungseinheit eine Kamera (60) umfasst, die unter einem bestimmten Betrachtungswinkel (64) in Richtung der Augen des Patienten ausgerichtet ist, um ein Bild der auf dem Rahmen angebrachten Ortungseinheit aufzuzeichnen, wobei die Vorrichtung Mittel zur Bearbeitung umfasst, um, ausgehend von diesem Bild, die relative Position der beiden Markierungen (54, 58) zu einander auszuwerten und, um einen repräsentativen Wert der Neigung der Teilhälften (11, 13) in Bezug auf einander zu liefern;
**dadurch gekennzeichnet, dass** sie darüber hinaus eine weitere Kamera (62) umfasst, welche in vertikalem Abstand von der einen Kamera (60) angeordnet und unter einem anderen Betrachtungswinkel (66) in Richtung der Augen des Patienten ausgerichtet ist;
und dadurch, dass die beiden Kameras (60, 62) zulassen, gleichzeitig zwei Aufnahmen der auf dem Rahmen (14) angeordneten Ortungseinheit (24, 56) unter den zwei verschiedenen Betrachtungswinkeln aufzuzeichnen, um die relative Position der beiden Markierungen (54, 58) zu einander genau zu berechnen und um einen repräsentativen Wert der Neigung der Teilhälften (11, 13) zu liefern.

2. Vorrichtung nach Anspruch 1, **dadurch gekennzeichnet, dass** das zweite Element (56) der Ortungseinheit auf der mittigen Brücke (15) angebracht ist.

3. Vorrichtung nach Anspruch 1 oder 2, **dadurch gekennzeichnet, dass** das Element, welches einen Bügel (24) bildet, Markierungen (38, 40) zur Kalibrierung aufweist.

4. Vorrichtung nach einem der Ansprüche 1 bis 3, **dadurch gekennzeichnet, dass**, während das erste Element (24) eine mittlere Ebene (Pm) des ersten Elements definiert, der zentrale Bereich (26) einen herausstehenden Stab (50) umfasst, der sich im Wesentlichen senkrecht zu der mittleren Ebene des ersten Elementes erstreckt, und dass sich die erste Markierung (54) auf einem freien Ende (52) des Stabes (50) befindet.

5. Vorrichtung nach Anspruch 4, **dadurch gekennzeichnet, dass** die Mittel zur Bearbeitung ein Modul zur Berechnung der Winkel umfassen, um den Winkel des herausstehenden Stabes (50) in Bezug auf die Blickwinkel (64, 66) zu bestimmen.

6. Vorrichtung nach Anspruch 4, **dadurch gekennzeichnet, dass** das Modul zur Bemessung der Winkel in der Lage ist, des Weiteren den pantoskopischen Winkel des Rahmens (14) zu berechnen.

7. Vorrichtung nach einem der Ansprüche 1 bis 6, **dadurch gekennzeichnet, dass** die Mittel zur Bearbeitung ein Modul zur Berechnung des Abstandes zwischen Linse und Auge umfassen, um, ausgehend von dem repräsentativen Wert der Neigung der Teilhälften (11, 13), den Abstand zu bestimmen, der die Augen (19, 21) des Patienten von den augenheilkundlichen Linsen (20, 22) trennt.

8. Vorrichtung nach Anspruch 7, **dadurch gekennzeichnet, dass** die Mittel zur Bearbeitung erlauben, ausgehend von den Aufnahmen, die relative Position der ersten Markierung (54) und der Hornhautreflexe zu einander auszuwerten, um den Abstand zu bestimmen, der die Augen (19, 21) des Patienten von den augenheilkundlichen Linsen (20, 22) trennt.

9. Vorrichtung nach einem der Ansprüche 1 bis 8, **dadurch gekennzeichnet, dass** die Kameras (60, 62) entlang einer vertikalen Ebene angebracht sind.

10. Verfahren zur Bestimmung der Ausrichtung der zu einem Rahmen (14) gehörenden augenheilkundlichen Linsen (20, 22), wobei das Verfahren von der Art ist, gemäß welcher:
- eine Aufzeichnungseinheit und eine Ortungseinheit bereitgestellt werden, welche auf einen Rahmen montierbar ist, der von einem Patienten aufgesetzt wird, wobei der Rahmen über zwei Aufnahme-Teilhälften (11, 13), die dafür ausgelegt sind, die augenheilkundlichen Linsen aufzunehmen, sowie eine mittige Brücke (15) verfügt, welche die beiden Teilhälften mit einander verbindet, wobei sich die beiden Teilhälften (11, 13) symmetrisch zu einander, in Bezug auf die mittige Brücke (15), erstrecken, wobei die Ortungseinheit zwei von einander unabhängige Elemente umfasst, nämlich ein erstes Element, das einen Bügel (24) bildet, der einen zentralen Bereich (26) aufweist, welcher mit einer ersten Markierung (54) versehen ist, und der über zwei Halterungsenden (32) verfügt, die dafür ausgelegt sind, mit jeweils einem der seitlichen Ränder (35, 37) der genannten Teilhälften in Kontakt zu kommen, um den zentralen Bereich (26) auf Distanz von dem Rahmen (14) zu halten, und ein zweites Element (56), das mit einer zweiten Markierung (58) versehen und zwischen den beiden seitlichen Rändern auf den Rahmen montiert ist, wobei die Aufzeichnungseinheit eine Kamera (60) umfasst, die unter einem bestimmten Betrachtungswinkel (64) in Richtung der Augen des Patienten ausgerichtet ist;
- ein Bild der auf dem Rahmen angebrachten Ortungseinheit aufgezeichnet wird;
- die relative Position der beiden Markierungen (54, 58) zu einander, ausgehend von diesem Bild, ausgewertet wird; und
- ein repräsentativer Wert der Neigung der Teilhälften (11, 13) in Bezug auf einander bereitgestellt wird;
**dadurch gekennzeichnet, dass** es des Weiteren folgende Schritte umfasst:
- eine weitere Kamera (62) wird bereitgestellt, die in vertikalem Abstand von der Kamera (60) angeordnet und unter einem anderen Betrachtungswinkel (66) in Richtung der Augen des Patienten ausgerichtet ist;
- es werden gleichzeitig zwei Aufnahmen der auf dem Rahmen (14) angeordneten Ortungseinheit (24, 56) unter den zwei verschiedenen Betrachtungswinkeln aufgezeichnet; und
- es erfolgt eine genaue Berechnung der relativen Position der beiden Markierungen (54, 58) zu einander, um einen repräsentativen Wert der Neigung der Teilhälften (11, 13) zu liefern.

11. Verfahren nach Anspruch 10, **dadurch gekennzeichnet, dass** das zweite Element (56) der Ortungseinheit auf der mittigen Brücke (15) angebracht wird.

## Claims

1. An apparatus for determining the orientation of ophthalmic lenses (20, 22) belonging to a frame (14), said apparatus comprising, on the one hand, a recording device and, on the other hand, a reference-frame unit that can be fitted on a frame (14) while the patient is wearing it, said frame having two receiving half-parts (11, 13) able to receive ophthalmic lenses and a central bridge (15) that links said two half-parts, said two half-parts (11, 13) extending symmetrically to one another relative to said central bridge, said reference-frame unit comprising two independent elements, a first element forming an arch (24) having a central portion (26) marked with a first reference mark (54) and two fixing ends (32) designed to be fitted respectively into the lateral edges (35, 37) of said half-parts to keep said central portion (26) away from said frame (14), and a second element (56) marked with a second reference mark (58), fitted onto said frame between the two lateral edges, said recording device comprising a camera (60) pointing at the eyes of said patient from a determined viewing angle (64) in order to record an image of said reference-frame unit fitted onto said frame, said apparatus comprising processing means for assessing, from said image, the relative position of the two reference marks (54, 58) and for providing a value representative of the inclination of said half-parts (11, 13) relative to one another;
**characterized in that** it also comprises another camera (62) separated vertically from said one camera (60) and pointing at the eyes of said patient from another viewing angle (66);
and **in that** the two cameras (60, 62) can be used to simultaneously record two images of said reference-frame unit (24, 56) fitted onto said frame (14) from the two viewing angles in order to accurately assess the relative position of the two reference marks (54, 58) and to provide a value representative of the inclination of said half-parts (11, 13).

2. The apparatus as claimed in claim 1, **characterized in that** said second element (56) of said reference-frame unit is fitted onto said central bridge (15).

3. The installation as claimed in claim 1 or 2, **characterized in that** said element forming an arch (24) has calibration reference marks (38, 40).

4. The apparatus as claimed in any one of claims 1 to 3, **characterized in that**, with said first element (24) defining a median plane (Pm) of the first element, said central portion comprises a projecting rod (50) that extends substantially perpendicularly to said median plane of the first element, and **in that** said first reference mark (54) is located on said free end (52) of said rod (50).

5. The apparatus as claimed in claim 4, **characterized in that** said processing means include an angle calculation module, for determining the angle of said projecting rod (50) relative to said viewing angles (64, 66).

6. The apparatus as claimed in claim 4, **characterized in that** said angle measurement module is designed to also calculate the pantoscopic angle of said frame (14).

7. The apparatus as claimed in any one of claims 1 to 6, **characterized in that** said processing means include a lens/eye distance calculation module for determining, from the value representative of the inclination of said half-parts (11, 13), the distance that separates the eyes (19, 21) of the patient from the ophthalmic lenses (20, 22).

8. The apparatus as claimed in claim 7, **characterized in that** said processing means can be used to assess, from said images, the relative position of said first reference mark (54) and of the corneal reflections for determining the distance that separates the eyes (19, 21) of the patient from the ophthalmic lenses (20, 22).

9. The apparatus as claimed in any one of claims 1 to 8, **characterized in that** said cameras (60, 62) are fitted in a vertical plane.

10. A method for determining the orientation of the ophthalmic lenses (20, 22) belonging to a frame (14), said method being of the type whereby:
- a recording device and a reference-frame unit are provided, which unit can be fitted on a frame (14) worn by a patient, said frame having two receiving half-parts (11, 13) able to receive ophthalmic lenses and a central bridge (15) linking said two half-parts, said two half-parts (11, 13) extending symmetrically to one another relative to said central bridge (14), said reference-frame unit comprising two independent elements, a first element forming an arch (24) having a central portion (26) marked with a first reference mark (54) and two fixing ends (32) designed to be fitted respectively into the lateral edges (35, 37) of said half-parts in order to keep said central portion (26) away from said frame (14), and a second element (56) marked with a second reference mark (58), fitted onto said frame between the two lateral edges, said recording device comprising a camera (60) pointing at the eyes of said patient from a determined viewing angle (64);
- an image of said reference-frame unit fitted onto said frame is recorded;
- from said image, the relative position of the two reference marks (54, 58) is assessed; and,
- a value representative of the inclination of said half-parts (11, 13) relative to one another is provided;
**characterized in that** it also comprises the following steps:
- another camera (62) is provided that is separated vertically from said one camera (60) and pointing at the eyes of said patient from another viewing angle (66);
- two images of said reference-frame unit (24, 56) fitted onto said frame (14) are recorded simultaneously from the two viewing angles; and,
- the relative position of the two reference marks (54, 58) is accurately assessed in order to provide a value representative of the inclination of said half-parts (11, 13).

11. The method as claimed in claim 10, **characterized in that** said second element (56) of said reference-frame unit is fitted onto said central bridge (15)
